**Europäisches Patentamt**

**European Patent Office**

**Office européen des brevets**

(11) Veröffentlichungsnummer: **0 152 610**
A2

(12) **EUROPÄISCHE PATENTANMELDUNG**

(21) Anmeldenummer: **84115968.4**

(22) Anmeldetag: **20.12.84**

(51) Int. Cl.⁴: **G 01 N 35/00**

(30) Priorität: **15.02.84 DE 3405292**

(43) Veröffentlichungstag der Anmeldung: **28.08.85**
**Patentblatt 85/35**

(84) Benannte Vertragsstaaten: **AT BE CH DE FR GB IT LI NL SE**

(71) Anmelder: **Eppendorf Gerätebau Netheler + Hinz GmbH, Barkhausenweg 1, D-2000 Hamburg 63 (DE)**

(72) Erfinder: **Baisch, Manfred, Krohnskamp 60, D-2000 Hamburg 60 (DE)**
Erfinder: **Rüsbüldt, Horst, Wüsthofweg 16 a, D-2000 Hamburg 63 (DE)**

(74) Vertreter: **UEXKÜLL & STOLBERG Patentanwälte, Beselerstrasse 4, D-2000 Hamburg 52 (DE)**

(54) Verfahren zum Durchführen von Probeanalysen sowie Rack zur Durchführung des Verfahrens.

(57) Bei einem Verfahren zum Durchführen von Probenanalysen mittels in geschlossenen Behältern (8) portioniert abgefüllter Reagenzien bestehen die Behälter aus Küvetten (8), die das in ihnen enthaltene Reagenz identifizierende Codierungen tragen. Für unterschiedliche Analysen benötigte Küvetten (8) werden zusammen mit einem die Probe enthaltenden Probenbehälter (7) in ein Rack eingesetzt. Auf das Rack (1) wird eine die Probe identifizierende Codierung (9) aufgebracht. Die Codierungen auf den Küvetten (8) und die Codierung (9) auf dem Rack (1) werden mit derselben Leseeinheit (10) gelesen.

Verfahren zum Durchführen von Probeanalysen
sowie Rack zur Durchführung des Verfahrens

Die Erfindung betrifft ein Verfahren zum Durchführen von Probenanalysen, bei dem Teile einer Probe und gegebenenfalls Lösungsmittel sowie Reagenzien zugesetzt werden, welche in geschlossenen, eine das Reagenz identifizierende Codierung tragenden Behältern portioniert abgefüllt sind, die eintretenden Reaktionsabläufe fotometrisch gemessen und die Ergebnisse zusammen mit einer Probenidentifikation angezeigt und/oder ausgedruckt werden.

Für ein bekanntes Verfahren dieser Art vertreibt die Firma Du Pont de Nemours (Deutschland) GmbH unter der Bezeichnung "aca SYSTEM" ein Analysengerät, mit dem sich an einer einem Patienten entnommenen Probenflüssigkeit unterschiedliche klinische Analysen durchführen lassen. Hierzu wird für jede der durchzuführenden Analysen ein Reagenzienbehälter mit den entsprechenden Reagenzien ausgewählt. Dieser Reagenzienbehälter besteht aus einem Kunststoffbeutel, der verschiedene geschlossene Aufnahmeräume für Reagenzien hat und einen flexiblen Küvettenbereich aufweist. Der Beutel ist an einem Bügel aufgehängt, der eine das im Beutel enthaltende Reagenz kennzeichnende Codierung trägt. Die vorhandene Probenflüssigkeit wird in einen Probenbehälter gefüllt, und dem Probenbehälter wird eine den Patienten identifizierende Karte zugeordnet, worauf der Probenbehälter einschließlich Karte und der für die verschiedenen Tests benötigten Reagenzienbehälter in das Analysengerät eingeführt und der Analysenablauf gestartet wird. Dazu werden im Gerät Probenflüssigkeit aus dem Probenbehälter sowie jeweils Reagenz und gegebenenfalls Lösungsmittel in den Bereich der flexiblen Küvette gebracht und der eintretende Reaktionsablauf des jeweiligen Tests fotometrisch gemessen.

- 2 -

Nach Durchführung aller Analysen druckt das Gerät die Analysenergebnisse zusammen mit einer Identifizierung des Patienten aus.

Dieses bekannte Verfahren ist trotz teilweiser Automatisierung verhältnismäßig arbeitsaufwendig, weil das Bedienungspersonal den Probenbehälter und die den Patienten identifizierende Karte sowie den für jeden einzelnen Analysenvorgang benötigten Reagenzienbehälter in das Gerät eingeben muß.

Es ist Aufgabe der Erfindung, ein Analysenverfahren wesentlich zu vereinfachen und insbesondere die zur Durchführung unterschiedlicher Analysen einer Probe bisher erforderlichen Abfüllungen und Identifizierungen der Teilproben zu vermeiden.

Zur Lösung dieser Aufgabe wird ein Verfahren der eingangs erwähnten Art erfindungsgemäß derart ausgestaltet, daß ein Probenbehälter sowie die erforderlichen Reagenzien enthaltende Behälter in Form von Küvetten in die Aufnahmeöffnungen eines Racks eingesetzt werden, daß auf das Rack eine die Probe identifizierende Codierung aufgebracht wird und daß die Codierungen auf den Küvetten und die Codierung auf dem Rack mit derselben Leseeinheit gelesen werden.

Bei dem erfindungsgemäßen Verfahren werden somit die Reagenzien für unterschiedliche Analysen einer Probe in einem Rack untergebracht, das auch den Probenbehälter aufnimmt. Am Rack wird eine die Probe identifizierende Codierung angebracht, die beispielsweise zuvor am angelieferten Probenbehälter befestigt gewesen sein kann. Auf diese Weise werden der einzige Probenbehälter und alle für die durchzuführenden Analysen benötigten Küvetten mit

0152610

Reagenzien im Rack zu einer Einheit zusammengefaßt, und es ist lediglich erforderlich, am Rack eine einzige die Probe identifizierende Codierung anzubringen, um die anzuzeigenden und/oder auszudruckenden Analysenergebnisse der analysierten Probe zuzuordnen. Dabei erfolgt das Lesen der Codierungen der Küvetten und der am Reck angebrachten Codierung mit derselben Leseeinheit, so daß auch der apparative Aufwand äußerst gering ist.

In einer bevorzugten Ausgestaltung des erfindungsgemäßen Verfahrens werden die Codierungen auf den Verschlüssen der Küvetten und auf der oberen Fläche des Racks angeordnet, und das Rack wird durch Bewegung in Richtung seiner Längserstreckung unter dem Kopf der Leseeinheit entlang bewegt.

Die Anbringung der Codierungen auf den Verschlüssen der Küvetten hat den Vorteil, daß Fehlbefüllungen einfacher vermieden werden können, weil die Codierung erst nach dem Befüllen der Küvette mit dieser verbunden wird. Darüber hinaus lassen sich die Küvetten mit ihrem gesamten unterhalb des Verschlusses befindlichen Körper im Rack positionieren, so daß eine stabile und definierte Lage der Küvette und insbesondere ihrer Codierung auf dem Behälterverschluß erreicht wird, durch die Lesefehler weitestgehend ausgeschaltet werden.

Die Erfindung betrifft ferner ein Rack mit Aufnahmeöffnungen für Küvetten und Öffnungen zum Durchtritt von Meßstrahlung zur fotometrischen Messung der Reaktionsabläufe in den Küvetten. Dieses Rack wird zur Durchführung des erfindungsgemäßen Verfahrens ausgestaltet durch eine Aufnahmefläche für eine Codierung, die in im wesentlichen einer Ebene mit den an den eingesteckten Küvetten vorgesehenen Codierungen liegt, so daß die Codierungen der Küvetten und die am Rack vorgesehene Kodierung am Kopf der Leseeinheit entlanggeführt werden können, ohne daß die Lage des Kopfes beim Übergang vom Lesen der Codierungen der Küvetten auf das Lesen der Codierung des Racks geändert zu werden brauchte.

Werden Küvetten eingesetzt, bei denen die Codierungen auf den Deckflächen der Verschlüsse vorgesehen sind, so befindet sich die Aufnahmefläche auf der Oberseite des Racks gegenüber der übrigen Fläche der Oberseite erhöht, und sie ist eben ausgebildet. Vorzugsweise liegt die Aufnahmefläche dann an einem Ende des Racks.

Die Erfindung wird im folgenden anhand der schematisch ein befülltes Rack und den Kopf einer Leseeinheit zeigenden Figur näher erläutert.

Das dargestellte Rack 1 besteht aus einem länglichen, im Querschnitt im wesentlichen rechteckförmigen Metallkörper, in dem entlang seiner Längsmittelebene nach oben offene Aufnahmeöffnungen 2 ausgebildet sind. Diese Aufnahmeöffnungen 2 dienen sowohl zur Aufnahme eines Probenbehälters 7 als auch von Küvetten 8, die abgefüllte Reagenzien enthalten und verschlossen sind. Wie angedeutet, weisen die Deckflächen der Verschlüsse der Küvetten Strichcodierungen auf, die das in der Küvette enthaltene Reagenz identifizieren. Die Aufnahmeöffnungen 2 sind so geformt, daß sich die Küvetten 8 nur derart in das Rack 1 einstecken lassen, daß ihre zur Messung von Reaktionsabläufen zu durchstrahlenden optischen Flächen im Bereich der sich quer durch das Rack 1 erstreckenden Bohrungen 3 liegen, wobei selbstverständlich jeder Aufnahmeöffnung 2 eine Bohrung 3 zugeordnet ist.

An einem Ende des Racks befindet sich auf der Oberseite eine Erhöhung 4, die einstückig mit dem übrigen Körper des Racks 1 ausgebildet ist. Die obere Fläche 5 der Erhöhung 4 ist eben und liegt im wesentlichen in einer Ebene mit den oberen Flächen der Behälterverschlüsse der in das Rack eingestecken Küvetten 8. Es sei erwähnt, daß die obere Fläche des Probenbehälters 7 nicht nach oben über diese Ebene hinausragt.

Auf die Fläche 5 wird eine die im Probenbehälter 7 befindliche Probe identifizierende Codierung 9 aufgebracht. Wie dargestellt, besteht diese Codierung zum einen aus einem Strichcode, der in der Ebene der Codierungen auf den Verschlüssen der Küvetten 8 liegt sowie zum anderen aus einer die Probe bezeichnenden Zahl, die sich auf der hinteren Fläche des Racks 1 befindet.

Zur Durchführung einer Probenanalyse wird der die Probe enthaltende Probenbehälter 7 in das Rack 1 eingesteckt und die die Probe identifizierende Codierung 9 am Rack befestigt. Die Küvetten 8, die die für die verschiedenen Analysen benötigten Reagenzien enthalten, werden in die Aufnahmeöffnungen 2 eingesteckt. Das so vorbereitete Rack wird in ein entsprechendes Analysengerät eingesetzt. In diesem erfolgt zunächst eine Temperierung, wie dies beispielsweise in der parallelen deutschen Patentanmeldung ... (Anwaltsakte: 20 316) beschrieben ist. Es werden dann Teilproben aus dem Probenbehälter 7 abgesaugt und unter Durchstechen des Verschlusses der jeweiligen Küvette 8 in diese eingefüllt, wobei gegebenenfalls auch Lösungsmittel zugesetzt werden kann. Um diese Befüllung durchzuführen, wird das Rack 1 durch Eingriff eines Fördernockens in die Aussparung 6 in Richtung seiner Längserstreckung entsprechend hin- und herbewegt.

Die Steuerung des Bewegungsablaufes sowohl für das Ein-

0152610

bringen der Teilproben in die verschiedenen Küvetten 8 als auch für die Bewegung einer Bohrung 3 in den Bereich des zur Messung des Reaktionsablaufes dienenden Strahlengangs einschließlich der Zuordnung des Messergebnisses zur jeweiligen Analyse erfolgt mittels einer Leseeinheit, unter deren Kopf 10 die Codierungen auf den Verschlüssen der Küvetten 8 geführt werden, um so die Codierungen zu lesen und das jeweilige Reagenz und damit die durchzuführende Analyse zu identifizieren sowie den nachfolgenden Bewegungsablauf für das Rack 1 zu steuern. Durch Lesen der Codierung 9 wird bei der Anzeige und/oder dem Ausdrucken der Analysenergebnisse auch eine eindeutige Zuordnung dieser Analysenergebnisse zu der analysierten, im Probenhälter 7 enthaltenen Probe erhalten.

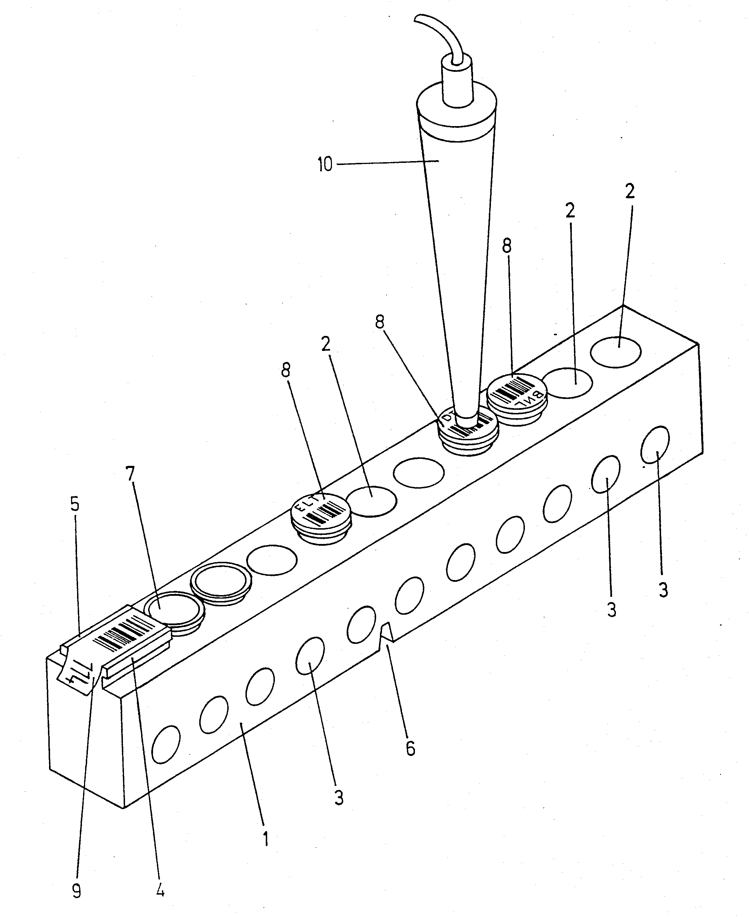

Ansprüche

1. Verfahren zum Durchführen von Probenanalysen, bei dem Teile einer Probe und gegebenenfalls auch Lösungsmittel sowie Reagenzien zugesetzt werden, welche in geschlossenen, eine das Reagenz identifizierende Codierung tragenden Behältern portioniert abgefüllt sind, die eintretenden Reaktionsabläufe fotometrisch gemessen und die Ergebnisse zusammen mit einer Probenidentifikation angezeigt und/oder ausgedruckt werden, dadurch gekennzeichnet, daß ein Probenbehälter (7) sowie die erforderlichen Reagenzien enthaltende Behälter in Form von Küvetten (8) in die Aufnahmeöffnungen (2) eines Racks (1) eingesetzt werden, daß auf das Rack (1) eine die Probe identifizierende Codierung (9) aufgebracht wird und daß die Codierungen auf den Küvetten (8) und die Codierung (9) auf dem Rack (1) mit derselben Leseeinheit (10) gelesen werden.

2. Verfahren nach Anspruch 1, dadurch gekennzeichnet, daß die Codierungen auf den Verschlüssen der Küvetten (8) und auf der oberen Fläche (5) des Racks (1) angebracht werden und daß das Rack (1) durch Bewegungen in Richtung seiner Längserstreckung unter dem Kopf (10) der Leseeinheit entlang bewegt wird.

3. Rack zur Durchführung des Verfahrens gemäß Anspruch 1 oder 2, mit Aufnahmeöffnungen für Küvetten und Öffnungen zum Durchtritt von Meßstrahlung zur fotometrischen Messung der Reaktionsabläufe in den Küvetten, gekennzeichnet durch eine Aufnahmefläche (5) für eine Codierung (9), die in im wesentlichen einer Ebene mit den an eingesteckten Küvetten (8) vorgesehenen Codierungen liegen.

4. Rack nach Anspruch 3 für Küvetten, bei denen die Codierungen auf den Deckflächen ihrer Verschlüsse vorgesehen sind, dadurch gekennzeichnet, daß die Aufnahmefläche (5) auf der Oberseite gegenüber der übrigen Fläche der Oberseite erhöht vorgesehen und eben ausgebildet ist.

5. Rack nach Anspruch 4, dadurch gekennzeichnet, daß die Aufnahmefläche (5) an einem Ende des Racks (1) vorgesehen ist.